# EUROPEAN PATENT APPLICATION

(11) **EP 4 410 456 A1**
(43) Date of publication of application: **07.08.2024**
(21) Application number: 22875722.5
(22) Date of filing: 05.09.2022
(51) Int. Cl.: B23B 21/00, B23B 3/22, B23B 25/00, B23B 29/24, B23Q 11/10

(54) **MACHINE TOOL**

(30) Priority: 30.09.2021 JP 2021160833
(71) Applicant: Star Micronics Co., Ltd., Shizuoka-shi, Shizuoka 422-8654 (JP)
(72) Inventor: ISHIKAWA, Takayuki, Shizuoka-shi, Shizuoka 422-8654 (JP); OGASAWARA, Hiroyuki, Shizuoka-shi, Shizuoka 422-8654 (JP)
(74) Representative: Grünecker Patent- und Rechtsanwälte PartG mbB
(86) International application number: PCT/JP2022/033217
(87) International publication number: WO 2023/053850

(57) **Abstract**

Provided is a machine tool with which a tool exchanging operation is easy. In a machine tool 1 including a spindle 31 that is capable of rotating about a spindle axis CL1 while gripping a workpiece W, and a tool post 5, the tool post 5 includes a quadruple rotary tool unit 53 to which one-side rotary tools 93a for machining the workpiece W are attached and which is capable of swiveling using, as a swiveling center, a first swiveling axis B1 that extends in a Y1-axis direction orthogonal to the spindle axis CL1, and a swiveling base 52 to which the quadruple rotary tool unit 53 is attached, and the quadruple rotary tool unit 53 is attached to the swiveling base 52 removably.

## Description

### [Technical Field]

The present invention relates to a machine tool including a spindle that is capable of rotating while gripping a workpiece, and a tool post.

### [Background Art]

A known machine tool includes a spindle that is capable of rotating about a spindle axis, and a tool post to which a tool for machining a workpiece gripped by the spindle is attached (see PTL 1 and so on, for example). The tool post of the machine tool described in PTL 1 includes a swiveling unit to which the tool for machining the workpiece is attached. The swiveling unit swivels using, as a swiveling center, a swiveling axis that extends in a Y-axis direction, which is orthogonal to the spindle axis. According to the machine tool described in PTL 1, by providing the swiveling unit, the orientation of the tool relative to the workpiece can be adjusted for machining, enabling various different types of machining.

Moreover, the swiveling unit of the machine tool described in PTL 1 includes a plurality of tool holding parts to which tools are attached. The machine tool described in PTL 1 machines the workpiece using a plurality of tools that can be attached to and removed from the plurality of tool holding parts.

### [Citation List]

### [Patent Literature]

[PTL 1] Japanese Patent Application Publication No. 2019-181653

### [Summary of Invention]

### [Technical Problem]

However, with the machine tool described in PTL 1, the plurality of tools must be exchanged within a narrow cutting chamber, and therefore a problem arises in that the tool exchanging operation is complicated. In addition, when a tool is exchanged, the tool is attached to the swiveling unit after removing chips generated while machining the workpiece from the swiveling unit. With the machine tool described in PTL 1, the operation for removing the chips must also be performed in the narrow cutting chamber, and therefore the tool exchanging operation becomes even more complicated.

The present invention has been designed in consideration of the problems described above, and an object thereof is to provide a machine tool with which a tool exchanging operation is easy.

### [Solution to Problem]

To solve the problems described above, a machine tool according to the present invention includes a spindle that is capable of rotating about a spindle axis while gripping a workpiece, and a tool post,
wherein the tool post includes a first swiveling unit to which a first tool for machining the workpiece is attached and which is capable of swiveling using, as a swiveling center, a first swiveling axis that extends in a first-axis direction orthogonal to the spindle axis, and a swiveling base to which the first swiveling unit is attached, and
the first swiveling unit is attached to the swiveling base removably.

According to this machine tool, the first swiveling unit can be removed so that an operation for removing chips or an operation for exchanging the first tool can be performed outside a cutting chamber, and as a result, the tool exchanging operation can be performed easily.

Here, the first swiveling unit may be a cartridge-type unit. Further, the first swiveling unit may be configured such that a plurality of the first tools can be attached thereto. Furthermore, the first swiveling unit may be attached to the swiveling base by a screw, and the screw may be configured such that a screw head part is exposed to the interior of the cutting chamber. In addition, the screw may be configured such that in a state where the first swiveling unit is attached to the swiveling base, the screw fastens the first swiveling unit to the swiveling base so that an operation can be performed by the tool. The swiveling base may be configured such that a plurality of different types of first swiveling units can be attached thereto exchangeably. Furthermore, the tool post includes a first swiveling attachment part for swiveling the attached first swiveling unit, and the first swiveling unit may be attached to the first swiveling attachment part removably. Moreover, the tool post may be configured to be capable of moving in the first-axis direction. In addition, the tool post may be configured to be capable of moving in a second-axis direction that is orthogonal to the spindle axis direction and also orthogonal to the first-axis direction. Note that the second-axis direction may be the direction in which the first tool approaches and separates from the workpiece.

In the machine tool of the present invention, at least two of a rotary tool unit to which a rotary tool is attached, a thread whirling unit, a hob cutting unit, and a high speed spindle unit may be attached to the swiveling base exchangeably as the first swiveling unit.

According to this aspect, various different types of machining can be performed.

Here, the swiveling base may be configured such that the rotary tool unit, to which the rotary tool is attached, and the thread whirling unit are attached exchangeably.

In the machine tool of the present invention, the swiveling base may include a first passage through which a coolant passes, and
the first swiveling unit may include a second passage which, in a state where the first swiveling unit is attached to the swiveling base, is coupled to the first passage such that the coolant that has passed through the first passage is supplied thereto, and a coolant nozzle for discharging the coolant that has passed through the second passage.

Thus, the coolant nozzle swivels in accordance with the swiveling of the first swiveling unit, and therefore the coolant can be discharged in a desired direction regardless of the swiveling angle of the first swiveling unit. Note that the desired direction may be a direction heading toward a cutting edge of the first tool.

In the machine tool of the present invention, the swiveling base may include an engaged part,
the first swiveling unit may include an engaging part that engages with the engaged part, an attachment position in which the first swiveling unit is attached to the swiveling base being determined by engaging the engaging part with the engaged part,
the first passage may be connected to the engaged part, and
the second passage may be connected to the engaging part.

Thus, the coolant that has passed through the first passage can be supplied to the second passage while suppressing an increase in the number of components.

In the machine tool of the present invention, an upper-side part of the first swiveling unit may be attached to the swiveling base, and
the tool post may include a lower end support part that supports a lower end part of the first swiveling unit.

Since the respective end parts of the first swiveling unit are supported by the swiveling base and the lower end support part, the first swiveling unit is unlikely to bend. As a result, a reduction in the machining accuracy of the first tool due to such bending is suppressed.

In the machine tool of the present invention, the tool post may include a second swiveling unit to which a second tool for machining the workpiece is attached and which is capable of swiveling using a second swiveling axis, which extends in the first-axis direction, as the swiveling center, and
the second swiveling unit may be attached to the swiveling base removably.

Since the first swiveling unit and the second swiveling unit can be attached to the tool post, even more different types of machining can be performed.

Here, the second swiveling axis may be positioned apart from the first swiveling axis in the second-axis direction. Further, the second swiveling unit may be disposed in a position opposing the first swiveling unit with the workpiece therebetween. Furthermore, the tool post may include a second swiveling attachment part to which the second swiveling unit is attached, and which swivels the second swiveling unit. In this case, the first swiveling attachment part may be configured so that the second swiveling unit can also be attached thereto, and the second swiveling attachment part may be configured so that the first swiveling unit can also be attached thereto. In other words, the first swiveling attachment part and the second swiveling attachment part may have identical configurations.

### [Advantageous Effects of Invention]

According to the present invention, it is possible to provide a machine tool with which a tool exchanging operation is easy.

### [Brief Description of Drawings]

[Fig. 1] Fig. 1 is a simplified plan view showing an internal configuration of an NC lathe according to an embodiment.
[Fig. 2] Fig. 2 is a view showing a tool post of the NC lathe shown in Fig. 1 from an opposite headstock side.
[Fig. 3] Fig. 3 is an A-A sectional view of the tool post shown in Fig. 2.
[Fig. 4] Fig. 4(a) is a plan view of a swiveling base shown in Fig. 2, Fig. 4(b) is a B-B sectional view of Fig. 4(a), and Fig. 4(c) is a bottom view of the swiveling base shown in Fig. 4(a).
[Fig. 5] Fig. 5(a) is a plan view of a quadruple rotary tool unit shown in Fig. 2, Fig. 5(b) is a C-C sectional view of Fig. 5(a), and Fig. 5(c) is a left-side view of the quadruple rotary tool unit shown in Fig. 5(a).
[Fig. 6] Fig. 6(a) is a plan view of a triple rotary tool unit shown in Fig. 2, Fig. 6(b) is a D-D sectional view of Fig. 6(a), and Fig. 6(c) is a left-side view of the triple rotary tool unit shown in Fig. 6(a).
[Fig. 7] Fig. 7 is a schematic sectional view showing internal configurations of the swiveling base shown in Fig. 2, and the quadruple rotary tool unit and triple rotary tool unit attached to the swiveling base.
[Fig. 8] Fig. 8 is a simplified plan view showing tool orientations when the quadruple rotary tool unit and the triple rotary tool unit shown in Fig. 2 are swiveled.
[Fig. 9] Fig. 9 is a front view of a tool post that is similar to that of Fig. 2 but illustrates a first replacement example.
[Fig. 10] Fig. 10(a) is a plan view of a thread whirling unit shown in Fig. 9, Fig. 10(b) is an E-E sectional view of Fig. 10(a), Fig. 10(c) is a left-side view of the thread whirling unit shown in Fig. 10(a), and Fig. 10(d) is a right-side view of the thread whirling unit shown in Fig. 10(a).
[Fig. 11] Fig. 11 is a front view of a tool post that is similar to that of Fig. 2 but illustrates a second replacement example.
[Fig. 12] Fig. 12(a) is a left-side view of a hob cutting unit shown in Fig. 11, and Fig. 12(b) is an F-F sectional view of Fig. 12(a).
[Fig. 13] Fig. 13(a) is a front view of a high speed spindle unit that can be attached to the swiveling base in place of the quadruple rotary tool unit or the triple rotary tool unit shown in Fig. 2, and Fig. 13(b) is a right-side view of the high speed spindle unit shown in Fig. 13(a).
[Fig. 14] Fig. 14 is a front view of a tool post that is similar to that of Fig. 2 but illustrates a modified example of the tool post.

### [Description of Embodiments]

An embodiment of the present invention will be described below with reference to the figures. In this embodiment, an example in which the present invention is applied to a numerical control (NC) lathe will be described.

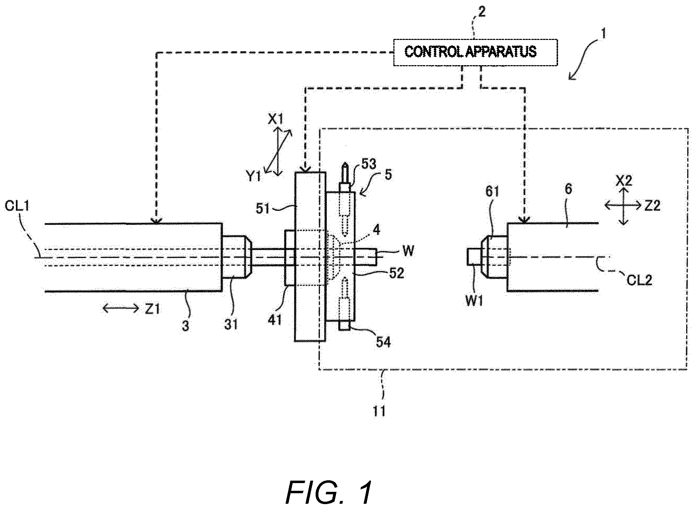

Fig. 1 is a simplified plan view showing an internal configuration of an NC lathe according to this embodiment.

As shown in Fig. 1, an NC lathe 1 includes a control apparatus 2, a headstock 3, a guide bush 4, a tool post 5, and an opposite headstock 6. Further, a range of a cutting chamber 11 is shown in Fig. 1 by a thin dot-dot-dash line rectangle. The NC lathe 1 corresponds to an example of a machine tool. An NC program, operation information corresponding to various commands used in the NC program, and so on are held in the control apparatus 2. The control apparatus 2 is a computer that operates the headstock 3, the tool post 5, and the opposite headstock 6 by means of numerical control in accordance with the NC program. The control apparatus 2 also controls rotation of a spindle 31 and an opposite spindle 61. Additionally, when a tool attached to the tool post 5 is a tool that rotates, such as a rotary tool, the control apparatus 2 also controls rotation of the tool.

The spindle 31 is mounted on the headstock 3. The headstock 3 is capable of moving in a Z1-axis direction together with the spindle 31. The Z1-axis direction is a horizontal direction, and the left-right direction in Fig. 1. The spindle 31 includes a gripping unit such as a collet chuck. The spindle 31 grips an elongated rod-shaped workpiece W, which is inserted into the interior thereof, releasably by means of the gripping unit. The spindle 31 is capable of rotating about a spindle axis CL1 while gripping the workpiece W. The direction of the spindle axis CL1 matches the Z1-axis direction. A spindle motor, not shown in the figures, such as a built-in motor, is provided in the spindle 31. By driving the spindle motor, the spindle 31 rotates about the spindle axis CL1. Accordingly, the workpiece W gripped by the spindle 31 rotates about the spindle axis CL1.

The guide bush 4 is fixed, via a guide bush supporting bed 41, to a leg that serves as a base of the NC lathe 1. An end surface of the guide bush 4 on the opposite side to the side on which the spindle 31 is disposed is exposed to the interior of the cutting chamber 11. The guide bush 4 supports a tip end-side part of the workpiece W gripped by the spindle 31 so as to be free to slide in the Z1-axis direction. The part of the guide bush 4 that supports the workpiece W is capable of rotating about the spindle axis CL1 in synchronization with the spindle 31. In other words, the spindle axis CL1 is also the rotation axis of the part of the workpiece W that is supported by the guide bush 4. Bending of the workpiece W during machining is suppressed by the guide bush 4, and therefore long, thin workpieces W in particular can be machined accurately.

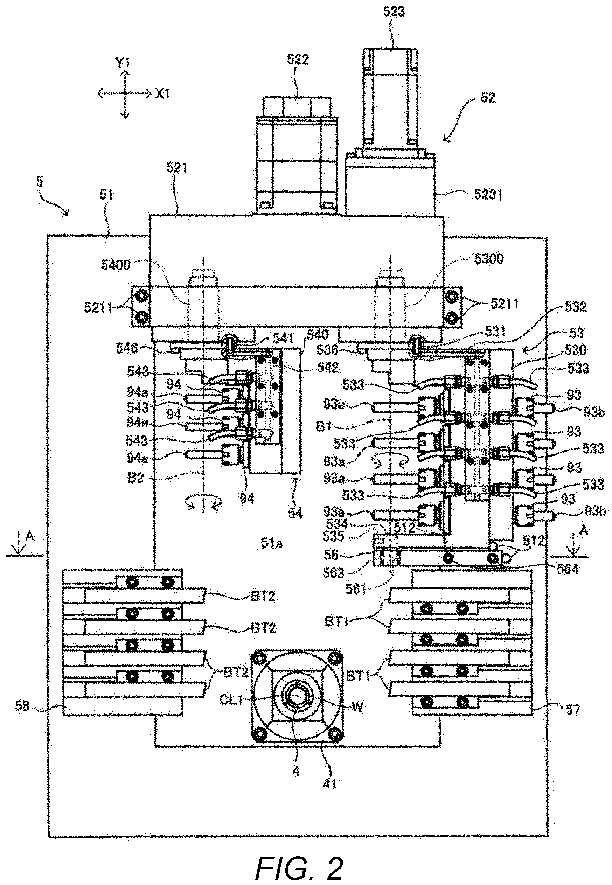

The tool post 5 is capable of moving in an X1-axis direction that is orthogonal to the spindle axis CL1 and oriented in a horizontal direction, and a Y1-axis direction that is orthogonal to the spindle axis CL1 and also orthogonal to the X1-axis direction. In Fig. 1, the up-down direction is the X1-axis direction, and a direction that is orthogonal to the paper surface is the Y1-axis direction. The Y1-axis direction corresponds to an example of a first-axis direction. Further, the X1-axis direction corresponds to an example of a second-axis direction. The tool post 5 includes a moving table 51, a swiveling base 52, a quadruple rotary tool unit 53, and a triple rotary tool unit 54. The quadruple rotary tool unit 53 corresponds to an example of a first swiveling unit, and also corresponds to an example of a rotary tool unit. Further, the triple rotary tool unit 54 corresponds to an example of a second swiveling unit, and also corresponds to an example of the rotary tool unit. Furthermore, the tool post 5 also includes a first lower end support member 56, a first gang-type tool holder 57, and a second gang-type tool holder 58, shown in Fig. 2. The swiveling base 52, the quadruple rotary tool unit 53, the triple rotary tool unit 54, the first lower end support member 56, the first gang-type tool holder 57, and the second gang-type tool holder 58 are disposed in the cutting chamber 11. The configuration of the tool post 5 will be described in detail hereinafter.

The opposite headstock 6 is disposed in the cutting chamber 11. The opposite spindle 61 is mounted on the opposite headstock 6. The opposite headstock 6 is capable of moving together with the opposite spindle 61 in an X2-axis direction and a Z2-axis direction. The X2-axis direction is the same direction as the X1-axis direction described above, and the Z2-axis direction is the same direction as the Z1-axis direction described above. Fig. 1 shows a state in which the opposite spindle 61 is positioned opposite the spindle 31 with the guide bush 4 therebetween. In this position, an opposite spindle axis CL2, which serves as a rotation center of a second spindle, is disposed to be collinear with the spindle axis CL1. The direction of the opposite spindle axis CL2 matches the Z2-axis direction. A cut-off workpiece W1 that is cut after machining thereof using the spindle 31 is complete is passed over to the opposite spindle 61. The opposite spindle 61 includes a gripping unit such as a collet chuck. A spindle motor such as a built-in motor is provided in the opposite headstock 6. By driving the spindle motor, the opposite spindle 61 rotates about the opposite spindle axis CL2. As a result, the cut-off workpiece W1 gripped by the opposite spindle 61 rotates about the opposite spindle axis CL2.

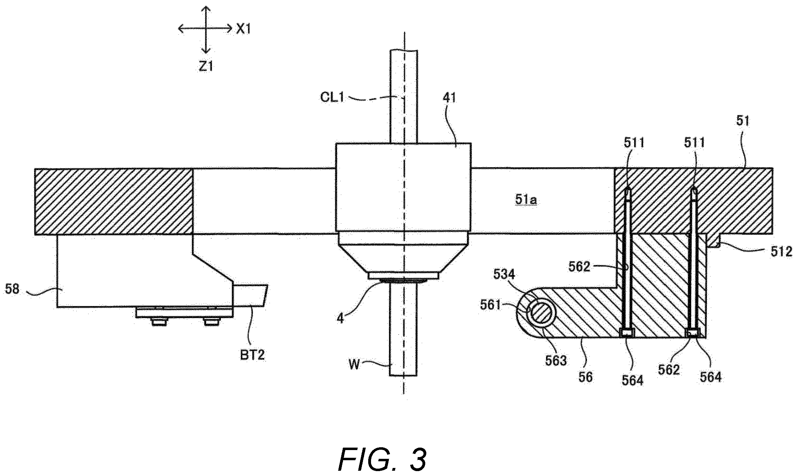

Fig. 2 is a view showing the tool post of the NC lathe shown in Fig. 1 from the opposite headstock side. Fig. 2 shows a state in which the triple rotary tool unit 54 has swiveled 180 degrees from Fig. 1. Fig. 2 also shows the guide bush 4, the guide bush supporting bed 41, the workpiece W, and the spindle axis CL1. The workpiece W and the spindle axis CL1 extend in an orthogonal direction to the paper surface of Fig. 2. Note that Fig. 2 shows partial cross-sections, and these parts are shaded. Fig. 3 is an A-A sectional view of the tool post shown in Fig. 2. In Fig. 3, sectional parts excluding a lower end support bearing 563 and screws 564, to be described below, are shaded. Hereinafter, in figures showing constituent elements of the tool post 5, views seen from the opposite headstock 6 (see Fig. 1) side will be described as front views, similarly to Fig. 2.

As described above, the tool post 5 includes the moving table 51, the swiveling base 52, the quadruple rotary tool unit 53, the triple rotary tool unit 54, the first lower end support member 56, the first gang-type tool holder 57, and the second gang-type tool holder 58. The moving table 51 is capable of moving in the X1-axis direction and the Y1-axis direction. As shown in Fig. 2, the moving table 51 has a rectangular shape with an opening 51a formed in the center. The moving table 51 moves in the X1-axis direction and the Y1-axis direction within a range in which the guide bush 4 is positioned in the opening 51a. The moving table 51 is moved in the X1-axis direction and the Y1-axis direction by an X1-axis motor and a Y1-axis motor, not shown in the figures, which are controlled by the control apparatus 2 (see Fig. 1).

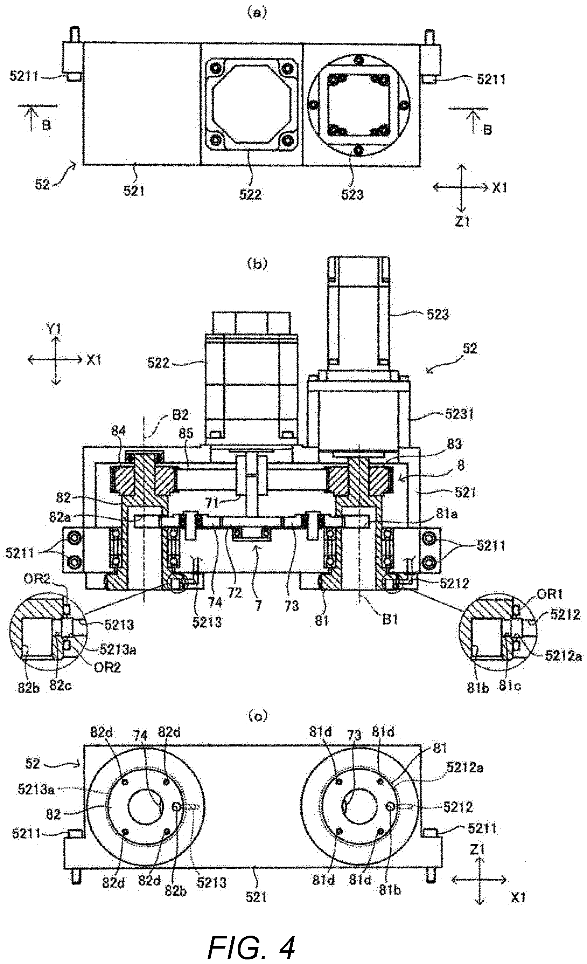

The swiveling base 52 includes a base body 521, a tool rotating motor 522, and a swiveling motor 523. Further, the swiveling base 52 also includes a rotating driving force transmitting mechanism 7 and a swiveling driving force transmitting mechanism 8, shown in Fig. 4(b). As shown in Fig. 2, the base body 521 is fixed to the moving table 51 by four screws 5211. The tool rotating motor 522 and the swiveling motor 523 are also fixed to the base body 521. The tool rotating motor 522 and the swiveling motor 523 are servo motors controlled by the control apparatus 2 (see Fig. 1). A reduction gear 5231 is provided in the swiveling motor 523.

The quadruple rotary tool unit 53 includes a first swiveling holder 530 and four first rotary tool modules 93. The four first rotary tool modules 93 are each fixed to the first swiveling holder 530. The first swiveling holder 530 extends in an up-down direction and has a substantially inverted C shape. A first bearing case 5300 is formed on an upper end part of the first swiveling holder 530. The first bearing case 5300 is inserted into the base body 521. The upper end part of the first swiveling holder 530 is removably attached to the base body 521. Further, a support shaft 534 is attached to a lower end part of the first swiveling holder 530. The support shaft 534 can be removed from the first swiveling holder 530 by loosening a screw 535. By driving the swiveling motor 523, the quadruple rotary tool unit 53 swivels by a maximum of 180 degrees using a first swiveling axis B1 as a swiveling center. The first swiveling axis B1 extends along the Y1-axis direction and is orthogonal to the spindle axis CL1 (see Fig. 1). The four first rotary tool modules 93 are fixed to the first swiveling holder 530. Note that the number of first rotary tool modules 93 fixed to the first swiveling holder 530 may be between one and three, or five or more. The four first rotary tool modules 93 are fixed so as to be arranged in a row in the Y1-axis direction. Fig. 2 shows the four first rotary tool modules 93 with one-side rotary tools 93a projecting on one side and other-side rotary tools 93b projecting on the other side respectively attached thereto. The one-side rotary tool 93a corresponds to an example of a first tool. Fig. 2 shows the quadruple rotary tool unit 53 at a reference swiveling angle, i.e., not swiveled. At the reference swiveling angle, the one-side rotary tools 93a and the other-side rotary tools 93b project in the X1-axis direction.

The first swiveling holder 530 includes a first coolant inlet 531, a second passage 532, and eight first coolant nozzles 533. The first coolant inlet 531, the second passage 532, and the eight first coolant nozzles 533 are configurations for discharging a coolant supplied from the swiveling base 52 toward respective tip ends of the one-side rotary tools 93a and the other-side rotary tools 93b. The first coolant inlet 531 is fixed to the upper end part of the first swiveling holder 530, and an upper-side part thereof projects upward. The first coolant inlet 531 corresponds to an example of an engaging part. The first coolant inlet 531 is a tubular component with a cavity through which the coolant passes formed in the inside thereof. O rings are attached respectively to an upper end part and a lower end part of the first coolant inlet 531. In the state shown in Fig. 2, in which the quadruple rotary tool unit 53 is attached to the swiveling base 52, the upper-side part of the first coolant inlet 531 engages with a first engaging hole 81b formed in a first swiveling sleeve 81 shown in Fig. 4. The second passage 532 is connected to the lower end of the first coolant inlet 531 and extends to the eight first coolant nozzles 533. The second passage 532 branches into eight passages midway, and the eight passages are respectively connected to the eight first coolant nozzles 533. The eight first coolant nozzles 533 project respectively toward the projecting ends of the one-side rotary tools 93a and the other-side rotary tools 93b attached to the quadruple rotary tool unit 53. A discharge port is formed in a tip end of each first coolant nozzle 533. The coolant that has passed through the first coolant inlet 531 and the second passage 532 is discharged through the discharge ports of the first coolant nozzles 533 in the projection directions of the one-side rotary tools 93a and the other-side rotary tools 93b. By discharging the coolant in these directions, a large amount of the coolant enters holes or grooves machined in the workpiece W (see Fig. 1) that is being machined by the one-side rotary tools 93a and the cut-off workpiece W1 (see Fig. 1) that is being machined by the other-side rotary tools 93b. By allowing the coolant to enter, machining resistance can be reduced, and chips can be more easily discharged from the holes and grooves, leading to an increase in machining accuracy.

A support through-hole 561 penetrating in the Y1-axis direction, and two screw through-holes 562 penetrating in the Z1-axis direction, as shown in Fig. 3, are formed in the first lower end support member 56. The first lower end support member 56 corresponds to an example of a lower end support part. The lower end support bearing 563 is fitted into the support through-hole 561. As shown in Fig. 2, by inserting the support shaft 534 into the lower end support bearing 563, a lower end part of the quadruple rotary tool unit 53 is supported swivelably by the first lower end support member 56. When the lower end part of the quadruple rotary tool unit 53 is supported by the first lower end support member 56, sideward movement thereof is restricted. As a result, an effect is achieved in that the quadruple rotary tool unit 53 is unlikely to bend even when a load is applied to the quadruple rotary tool unit 53 during machining, leading to an increase in machining accuracy. Note that in a case where the quadruple rotary tool unit 53 is unlikely to bend, the first lower end support member 56 may be omitted.

As shown in Fig. 3, two screw holes 511 are formed in the moving table 51. The first lower end support member 56 is fixed removably to the moving table 51 by the two screws 564, which penetrate the screw through-holes 562 and are screwed into the screw holes 511. The first lower end support member 56 can be removed from the moving table 51 by removing the two screws 564. As shown in Fig. 2, three positioning pins 512 used to attach the first lower end support member 56 accurately to a predetermined position of the moving table 51 are formed in the moving table 51. The positioning pins 512 project toward the front side of the paper surface in Fig. 2.

The triple rotary tool unit 54 includes a second swiveling holder 540 and three second rotary tool modules 94. The three second rotary tool modules 94 are respectively fixed to the second swiveling holder 540. The second swiveling holder 540 extends in the up-down direction. A second bearing case 5400 is formed on an upper end part of the second swiveling holder 540. The second bearing case 5400 is inserted into the base body 521. The upper end part of the second swiveling holder 540 is removably attached to the base body 521. By driving the swiveling motor 523 of the swiveling base 52, the triple rotary tool unit 54 swivels by a maximum of 180 degrees using a second swiveling axis B2 as the swiveling center. The second swiveling axis B2 is parallel to the first swiveling axis B 1 in a position separated from the first swiveling axis B1 in the X1-axis direction. In other words, the second swiveling axis B2 extends along the Y1-axis direction. Three second rotary tool modules 94 are fixed to the second swiveling holder 540. Note that the number of second rotary tool modules 94 fixed to the second swiveling holder 540 may be one, two, four, or more. The three second rotary tool modules 94 are fixed so as to be arranged in a row in the Y1-axis direction. Fig. 2 shows the three second rotary tool modules 94 with rotary tools 94a projecting on one side attached thereto. The rotary tool 94a corresponds to an example of a second tool. Fig. 2 shows the triple rotary tool unit 54 at the reference swiveling angle, i.e., not swiveled. At the reference swiveling angle, the second rotary tool modules 94 project in the X1-axis direction.

The second swiveling holder 540 includes a second coolant inlet 541, a fourth passage 542, and three second coolant nozzles 543. The second coolant inlet 541, the fourth passage 542, and the three second coolant nozzles 543 are configurations for discharging the coolant supplied from the swiveling base 52 toward respective tip ends of the rotary tools 94a. The second coolant inlet 541 is fixed to the upper end part of the second swiveling holder 540, and an upper-side part thereof projects upward. The second coolant inlet 541 has an identical tubular shape to the first coolant inlet 531, and a cavity through which the coolant passes is formed in the inside thereof. In the state shown in Fig. 2, in which the triple rotary tool unit 54 is attached to the swiveling base 52, the upper-side part of the second coolant inlet 541 engages with a second engaging hole 82b formed in a second swiveling sleeve 82 shown in Fig. 4. The fourth passage 542 is connected to a lower end of the second coolant inlet 541 and extends to the three second coolant nozzles 543. The fourth passage 542 branches into three passages midway, and the three passages are respectively connected to the three second coolant nozzles 543. The three second coolant nozzles 543 project respectively toward the projecting ends of the rotary tools 94a attached to the triple rotary tool unit 54. A discharge port is formed in the tip end of each second coolant nozzle 543. The coolant that has passed through the second coolant inlet 541 and the fourth passage 542 is discharged through the discharge ports of the second coolant nozzles 543 in the projection direction of the rotary tools 94a. By discharging the coolant in this direction, a large amount of the coolant enters the holes or grooves machined in the workpiece W (see Fig. 1) that is being machined by the rotary tools 94a. By allowing the coolant to enter, the machining resistance can be reduced, and chips can be more easily discharged from the holes and grooves, leading to an increase in machining accuracy.

The first gang-type tool holder 57 is a cutting tool holder to which a plurality of first cutting tools BT1 are removably attached. The first gang-type tool holder 57 is disposed directly beneath the first lower end support member 56 and fixed to the moving table 51. Four first cutting tool attachment parts for attaching the first cutting tools BT1 removably are formed on the first gang-type tool holder 57. Note that one to three, five, or more first cutting tool attachment parts may be provided. The four first cutting tool attachment parts are formed so as to be arranged in a row in the Y1-axis direction. Fig. 2 shows a state in which the four first cutting tools BT1 are attached to the first gang-type tool holder 57.

The second gang-type tool holder 58 is a cutting tool holder to which a plurality of second cutting tools BT2 are removably attached. The second gang-type tool holder 58 is disposed opposite the first gang-type tool holder 57 with the guide bush 4 therebetween, and fixed to the moving table 51. Four second cutting tool attachment parts for attaching the second cutting tools BT2 removably are formed on the second gang-type tool holder 58. Note that one to three, five, or more second cutting tool attachment parts may be provided. The four second cutting tool attachment parts are formed so as to be arranged in a row in the Y1-axis direction. Fig. 2 shows a state in which the four second cutting tools BT2 are attached to the second gang-type tool holder 58.

Fig. 4(a) is a plan view of the swiveling base shown in Fig. 2, Fig. 4(b) is a B-B sectional view of Fig. 4(a), and Fig. 4(c) is a bottom surface view of the swiveling base shown in Fig. 4(a). In Fig. 4(b), the tool rotating motor 522, the swiveling motor 523, and the reduction gear 5231 are depicted without being cross-sectioned.

As shown in Fig. 4(b), the rotating driving force transmitting mechanism 7 that transmits the driving force of the tool rotating motor 522 and the swiveling driving force transmitting mechanism 8 that swivels the quadruple rotary tool unit 53 and the triple rotary tool unit 54 when driving force is transmitted thereto from the swiveling motor 523 are disposed inside the base body 521. Further, a first passage 5212 and a third passage 5213 are formed in a casing of the base body 521. The rotating driving force transmitting mechanism 7 includes a coupling 71, a driving gear 72, a first driven gear 73, and a second driven gear 74. The coupling 71 couples an output shaft of the tool rotating motor 522 and a shaft to which the driving gear 72 is fixed. The first driven gear 73 and the second driven gear 74 have identical configurations. Further, the first driven gear 73 and the second driven gear 74 respectively engage with the driving gear 72. A part of the first driven gear 73 passes through a cutout 81a formed in the first swiveling sleeve 81, to be described below, so as to enter the first swiveling sleeve 81. Similarly, a part of the second driven gear 74 passes through a cutout 82a formed in the second swiveling sleeve 82, to be described below, so as to enter the second swiveling sleeve 82. When the tool rotating motor 522 is driven, the coupling 71, the driving gear 72, the first driven gear 73, and the second driven gear 74 rotate.

The swiveling driving force transmitting mechanism 8 includes the first swiveling sleeve 81, the second swiveling sleeve 82, a first pulley 83, a second pulley 84, and a transmission belt 85. The first swiveling sleeve 81, the second swiveling sleeve 82, the first pulley 83, and the second pulley 84 rotate when the swiveling motor 523 is driven, and in Fig. 4(b), cross-sections thereof are shaded. The first swiveling sleeve 81 has a solid shaft shape on an upper side and a hollow tubular shape on a lower side. The first swiveling sleeve 81 corresponds to an example of a first swiveling attachment part. A shaft center of the shaft-shaped part and a tube center of the tubular part of the first swiveling sleeve 81 are both coaxial with the first swiveling axis B1. The tubular part of the first swiveling sleeve 81 has an inner diameter that is slightly larger than the outer diameter of the first bearing case 5300 (see Fig. 2). The cutout 81a through which the first driven gear 73 enters is formed in the tubular part of the first swiveling sleeve 81. The cutout 81a is formed in an angle range at which the first driven gear 73 does not contact the cutout 81a even when the first swiveling sleeve 81 rotates. An upper end of the first swiveling sleeve 81 is coupled to an output shaft of the reduction gear 5231. The first pulley 83 is fixed to an upper-side part of the first swiveling sleeve 81. The first swiveling sleeve 81 is held in the casing of the base body 521 rotatably via a bearing.

As shown in Fig. 4(b) and Fig. 4(c), a lower end of the first swiveling sleeve 81 is formed in a slightly thicker flange shape. The first engaging hole 81b, which has a downward opening, is formed in the flange-shaped part. The first engaging hole 81b corresponds to an example of an engaged part. The first engaging hole 81b has an inner diameter that is slightly larger than the outer diameter of the first coolant inlet 531 (see Fig. 2). In other words, the first engaging hole 81b has an inner diameter that is larger than the outer diameter of the first coolant inlet 531 by a fitting tolerance. Further, a first coolant reception hole 81c that is connected to an opening in a side surface of the flange-shaped part is provided in the first engaging hole 81b. A first annular groove 5212a formed in an annular shape so as to surround the flange-shaped part of the first swiveling sleeve 81 is formed in a downstream end of the first passage 5212. The first annular groove 5212a is connected to the first coolant reception hole 81c. The coolant that flows through the first passage 5212 flows from the first annular groove 5212a into the first coolant reception hole 81c and then into the first engaging hole 81b, regardless of the rotation angle of the first swiveling sleeve 81. Note that two O rings OR1 are disposed between the casing of the base body 521 and the flange-shaped part of the first swiveling sleeve 81 so as to sandwich the first annular groove 5212a. The O rings OR1 prevent the coolant that flows from the first annular groove 5212a of the base body 521 into the first coolant reception hole 81c of the first swiveling sleeve 81 from leaking out between the base body 521 and the first swiveling sleeve 81. Furthermore, as shown in Fig. 4(c), four screw holes 81d are formed in the flange-shaped part of the first swiveling sleeve 81.

Apart from the position of a cutout 82a, the second swiveling sleeve 82 has the same shape as the first swiveling sleeve 81. The second swiveling sleeve 82 corresponds to an example of a second swiveling attachment part. The cutout 82a is formed in an angle range at which the second driven gear 74 does not contact the cutout 82a even when the second swiveling sleeve 82 rotates. The shaft center of the shaft-shaped part and the tube center of the tubular part of the second swiveling sleeve 82 are both coaxial with the second swiveling axis B2. The tubular part of the second swiveling sleeve 82 has an inner diameter that is slightly larger than the outer diameter of the first bearing case 5300 (see Fig. 2) and the second bearing case 5400 (see Fig. 2). The second pulley 84 is fixed to an upper-side part of the second swiveling sleeve 82. The second swiveling sleeve 82 is held in the casing of the base body 521 rotatably via a bearing.

As shown in Fig. 4(b) and Fig. 4(c), the second engaging hole 82b, which has a downward opening, is formed in the flange-shaped part of the second swiveling sleeve 82. The second engaging hole 82b has an inner diameter that is slightly larger than the outer diameter of the first coolant inlet 531 (see Fig. 2) and the second coolant inlet 541 (see Fig. 2). In other words, the second engaging hole 82b has an inner diameter that is larger than the outer diameter of the first coolant inlet 531 and the outer diameter of the second coolant inlet 541 by a fitting tolerance. Further, a second coolant reception hole 82c that is connected to an opening in a side surface of the flange-shaped part is provided in the second engaging hole 82b. A second annular groove 5213a formed in an annular shape so as to surround the flange-shaped part on the lower end of the second swiveling sleeve 82 is formed in a downstream end of the third passage 5213 formed in the interior of the base body 521. The second annular groove 5213a is connected to the second coolant reception hole 82c. The coolant that flows through the third passage 5213 flows from the second annular groove 5213a into the second coolant reception hole 82c and then into the second engaging hole 82b, regardless of the rotation angle of the second swiveling sleeve 82. Note that two O rings OR2 are disposed between the base body 521 and the flange-shaped part of the second swiveling sleeve 82 so as to sandwich the second annular groove 5213a. The O rings OR2 prevent the coolant from leaking out between the base body 521 and the second swiveling sleeve 82. Furthermore, as shown in Fig. 4(c), four screw holes 82d are formed in the flange-shaped part of the second swiveling sleeve 82.

The first pulley 83 and the second pulley 84 have the same diameter and the same shape. The transmission belt 85 is stretched between the first pulley 83 and the second pulley 84. The rotation of the first swiveling sleeve 81 is transmitted to the second swiveling sleeve 82 by the transmission belt 85. Hence, when the swiveling motor 523 is driven, the first swiveling sleeve 81 and the second swiveling sleeve 82 rotate in synchronization at the same angle. Note that instead of the transmission belt 85, the first swiveling sleeve 81 and the second swiveling sleeve 82 may be coupled by a gear, and the first swiveling sleeve 81 and the second swiveling sleeve 82 may be caused to rotate in synchronization with each other. Further, for example, an electric clutch may be provided between the second swiveling sleeve 82 and the second pulley 84, and the driving force of the swiveling motor 523 may be transmitted selectively to the second swiveling sleeve 82. When this configuration is employed, an encoder may be attached to the second swiveling sleeve 82 so that the rotation angle of the second swiveling sleeve 82 can be acquired. A brake mechanism may also be attached to the second swiveling sleeve 82 so that when machining is performed using the triple rotary tool unit 54 (see Fig. 2), the electric clutch can be disengaged once the triple rotary tool unit 54 has rotated to a desired rotation angle, and the triple rotary tool unit 54 can be held at that rotation angle by the brake mechanism.

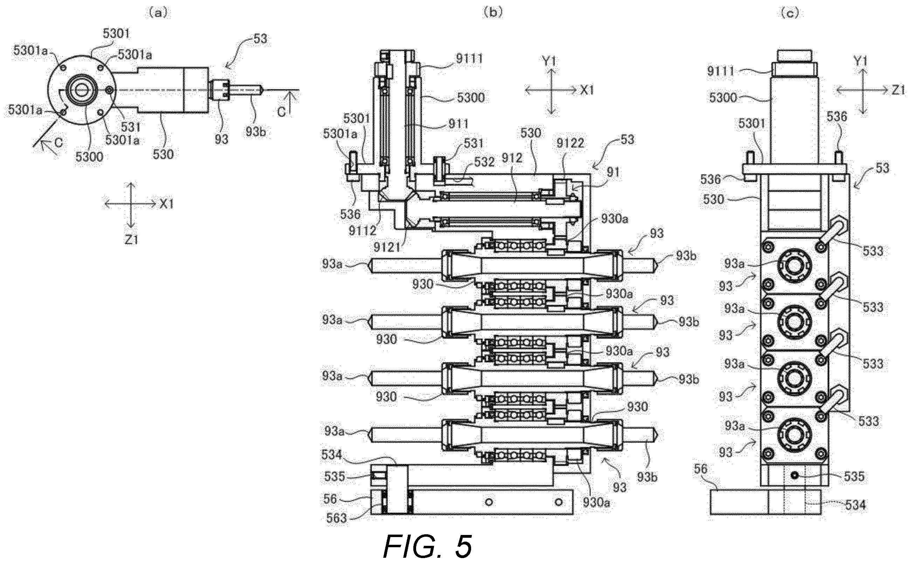

Fig. 5(a) is a plan view of the quadruple rotary tool unit shown in Fig. 2, Fig. 5(b) is a C-C sectional view of Fig. 5(a), and Fig. 5(c) is a left-side view of the quadruple rotary tool unit shown in Fig. 5(a). Note that in Fig. 5(a), a block-shaped member having a part of the second passage 532 formed in the interior thereof and the first coolant nozzles 533 have been omitted.

As shown in Fig. 5(a) and Fig. 5(b), a flange 5301 is formed on a base part of the first bearing case 5300 of the quadruple rotary tool unit 53. Four through-holes 5301a are formed in the flange 5301. As shown in Fig. 5(b), screws 536 for attaching the quadruple rotary tool unit 53 to the swiveling base 52 (see Fig. 2) penetrate the through-holes 5301a. By fastening the four screws 536 penetrating the four through-holes 5301a respectively to the four screw holes 81d formed in the flange-shaped part of the first swiveling sleeve 81, shown in Fig. 4(c), the quadruple rotary tool unit 53 is attached removably to the swiveling base 52.

A first tool rotating mechanism 91 that is connected to the rotating driving force transmitting mechanism 7 (see Fig. 4(b)) in order to transmit driving force transmitted from the rotating driving force transmitting mechanism 7 to the first rotary tool modules 93 is provided inside the first swiveling holder 530. The first tool rotating mechanism 91 includes a first connection shaft 911 and a first transmission shaft 912. The first connection shaft 911 extends through the inside of the first bearing case 5300 in the Y1-axis direction. The first connection shaft 911 is supported rotatably by two bearings disposed in the first bearing case 5300. A first connection gear 9111 is fixed to an upper end of the first connection shaft 911. The first connection gear 9111 engages with the first driven gear 73, shown in Fig. 4(b), in a state where the quadruple rotary tool unit 53 is attached to the swiveling base 52 (see Fig. 2). A bevel gear 9112 is fixed to a lower end of the first connection shaft 911.

Fig. 5(b) shows the quadruple rotary tool unit 53 at the reference swiveling angle. At the reference swiveling angle, the first transmission shaft 912 extends in the X1-axis direction. The first transmission shaft 912 is supported rotatably by two bearings disposed in the casing of the first swiveling holder 530. A bevel gear 9121 is fixed to one end of the first transmission shaft 912. The bevel gear 9121 engages with the bevel gear 9112 of the first connection shaft 911. A spur gear 9122 is fixed to the other end of the first transmission shaft 912.

The first rotary tool modules 93 each include a first rotary shaft 930. The one-side rotary tool 93a and the other-side rotary tool 93b are respectively gripped by collet chucks provided on the respective end parts of the first rotary shaft 930. By loosening the collet chucks, the one-side rotary tools 93a and the other-side rotary tools 93b can be extracted from the first rotary shaft 930. The first rotary shafts 930 are supported on the first swiveling holder 530 rotatably by four bearings. A spur gear 930a is fixed to the other end side of the first rotary shaft 930. The spur gears 930a of adjacent first rotary tool modules 93 engage with each other. Furthermore, the spur gear 930a of the first rotary tool module 93 attached in the uppermost position engages with the spur gear 9122 of the first transmission shaft 912. The driving force of the tool rotating motor 522 (see Fig. 2) is transmitted to the first rotary shafts 930 by the rotating driving force transmitting mechanism 7 described above (see Fig. 4(b)), the first tool rotating mechanism 91, and the spur gears 9122 of the first rotary tool modules 93, causing the one-side rotary tools 93a and the other-side rotary tools 93b to rotate.

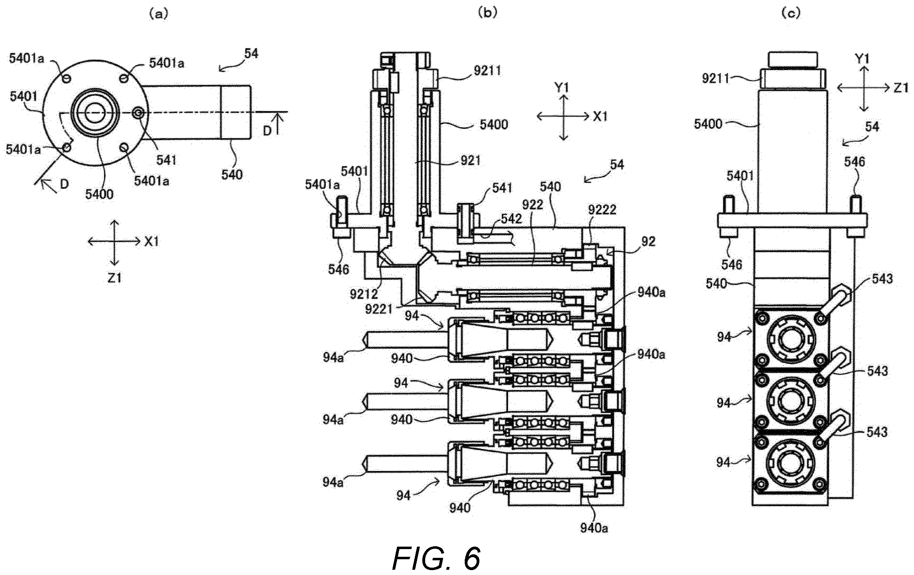

Fig. 6(a) is a plan view of the triple rotary tool unit shown in Fig. 2, Fig. 6(b) is a D-D sectional view of Fig. 6(a), and Fig. 6(c) is a left-side view of the triple rotary tool unit shown in Fig. 6(a). Note that in Fig. 6(a), a block-shaped member having a part of the fourth passage 542 formed in the interior thereof and the second coolant nozzles 543 have been omitted.

As shown in Fig. 6(a) and Fig. 6(b), the second bearing case 5400, a flange 5401, a second connection shaft 921, and a second transmission shaft 922 have the same shapes as the first bearing case 5300, the flange 5301, the first connection shaft 911, and the first transmission shaft 912, shown in Fig. 5(b). As shown in Fig. 6(b), screws 546 for attaching the triple rotary tool unit 54 to the swiveling base 52 (see Fig. 2) penetrate through-holes 5401a formed in the flange 5401. By fastening the four screws 546 penetrating the four through-holes 5401a respectively to the four screw holes 82d formed in the flange-shaped part of the second swiveling sleeve 82, shown in Fig. 4(c), the triple rotary tool unit 54 is attached removably to the swiveling base 52.

As shown in Fig. 6(b), a second tool rotating mechanism 92 that is connected to the rotating driving force transmitting mechanism 7 (see Fig. 4(b)) in order to transmit the driving force transmitted from the rotating driving force transmitting mechanism 7 to the second rotary tool modules 94 is provided inside the second swiveling holder 540. The second tool rotating mechanism 92 includes the second connection shaft 921 and the second transmission shaft 922 mentioned above. As regards the second connection shaft 921, a second connection gear 9211 is fixed to an upper end of the second connection shaft 921. The second connection gear 9211 engages with the second driven gear 74, shown in Fig. 4(b), in a state where the triple rotary tool unit 54 is attached to the swiveling base 52. A bevel gear 9212 is fixed to a lower end of the second connection shaft 921.

Fig. 6(b) shows the triple rotary tool unit 54 at the reference swiveling angle. At the reference swiveling angle, the second transmission shaft 922 extends in the X1-axis direction. A bevel gear 9221 is fixed to one end of the second transmission shaft 922. The bevel gear 9221 engages with the bevel gear 9212 of the second connection shaft 921. A spur gear 9222 is fixed to the other end of the second transmission shaft 922.

The second rotary tool modules 94 each include a second rotary shaft 940. The rotary tool 94a is gripped by a collet chuck provided on one end part of the second rotary shaft 940. By loosening the collet chuck, the rotary tool 94a can be extracted from the second rotary shaft 940. The second rotary shafts 940 are supported on the second swiveling holder 540 rotatably by four bearings. A spur gear 940a is fixed to the other end side of the second rotary shaft 940. The spur gears 940a of adjacent second rotary tool modules 94 engage with each other. Furthermore, the spur gear 940a of the second rotary tool module 94 attached in the uppermost position engages with the spur gear 9222 of the second transmission shaft 922. The driving force of the tool rotating motor 522 (see Fig. 2) is transmitted to each of the second rotary shafts 940 by the rotating driving force transmitting mechanism 7 described above (see Fig. 4(b)), the second tool rotating mechanism 92, and the spur gears 9222 of the second rotary tool modules 94, causing the rotary tools 94a to rotate.

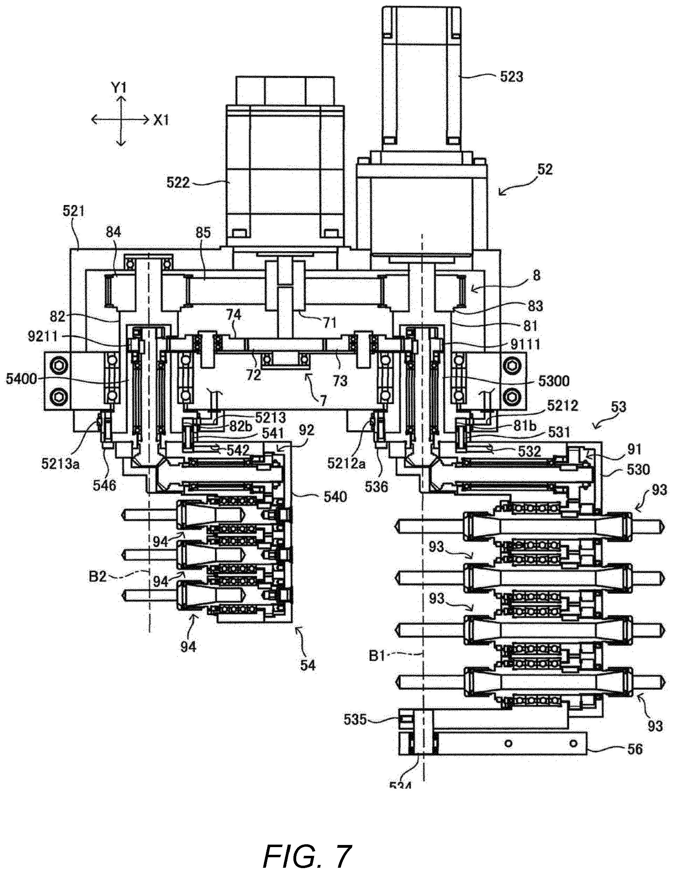

Fig. 7 is a schematic sectional view showing internal configurations of the swiveling base shown in Fig. 2, and the quadruple rotary tool unit and triple rotary tool unit attached to the swiveling base.

As shown in Fig. 7, in a state where the quadruple rotary tool unit 53 is attached to the swiveling base 52, the first bearing case 5300 engages with the tubular part of the first swiveling sleeve 81. Further, the first coolant inlet 531 engages with the first engaging hole 81b. As a result of these engagements, the position in which the quadruple rotary tool unit 53 is attached to the swiveling base 52 and the attachment angle of the quadruple rotary tool unit 53 in the swiveling direction are fixed. Hence, when the first swiveling sleeve 81 rotates, the quadruple rotary tool unit 53 swivels so as to follow the rotation thereof. Furthermore, the first passage 5212 is coupled to the second passage 532 through the first engaging hole 81b and the first coolant inlet 531. Thus, the coolant that has passed through the first passage 5212 is supplied to the second passage 532. Here, the first coolant inlet 531 and the first engaging hole 81b form a so-called positioning structure, and since there is almost no gap therebetween, coolant leakage through the gap is suppressed. Accordingly, when the pressure of the coolant is low, the O ring attached to the part of the first coolant inlet 531 that engages with the first engaging hole 81b can be omitted. Similarly, in a state where the triple rotary tool unit 54 is attached to the swiveling base 52, the second bearing case 5400 engages with the tubular part of the second swiveling sleeve 82. Further, the second coolant inlet 541 engages with the second engaging hole 82b. As a result of these engagements, the position in which the triple rotary tool unit 54 is attached to the swiveling base 52 and the attachment angle of the triple rotary tool unit 54 in the swiveling direction are fixed. Hence, when the second swiveling sleeve 82 rotates, the triple rotary tool unit 54 swivels so as to follow the rotation thereof. Note that as described above, the first swiveling sleeve 81 and the second swiveling sleeve 82 rotate in synchronization at the same angle, and therefore the quadruple rotary tool unit 53 and the triple rotary tool unit 54 also rotate in synchronization at the same angle. Also similarly, the third passage 5213 is coupled to the fourth passage 542 through the second engaging hole 82b and the second coolant inlet 541. Thus, the coolant that has passed through the third passage 5213 is supplied to the fourth passage 542. Here, the second coolant inlet 541 and the second engaging hole 82b form a so-called positioning structure, and there is almost no gap therebetween. Accordingly, when the pressure of the coolant is low, the O ring attached to the part of the second coolant inlet 541 that engages with the second engaging hole 82b can be omitted.

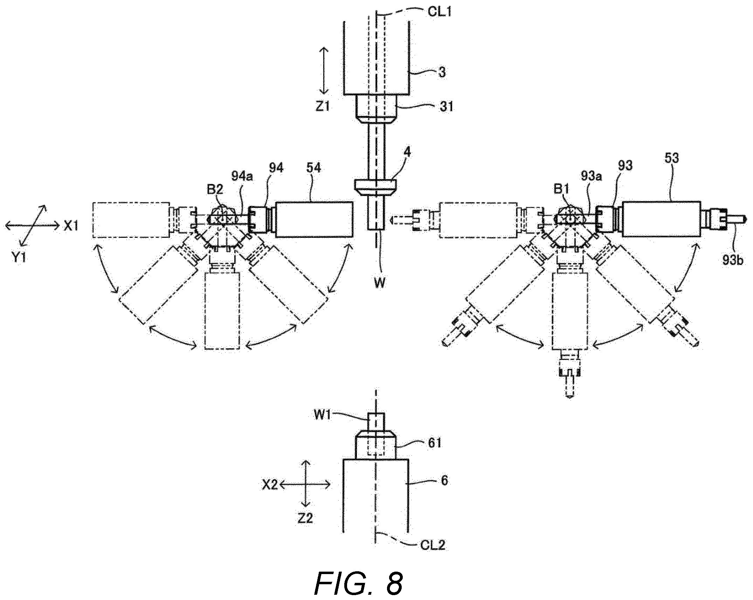

Fig. 8 is a simplified plan view showing the orientations of the tools when the quadruple rotary tool unit and triple rotary tool unit shown in Fig. 2 are swiveled. In Fig. 8, solid lines denote the quadruple rotary tool unit 53 and the triple rotary tool unit 54 at the reference swiveling angle, and dot-dot-dash lines show the quadruple rotary tool unit 53 and the triple rotary tool unit 54 after being swiveled from the reference swiveling angle. Note that in Fig. 8, as illustrated by the one-side rotary tools 93a and the rotary tools 94a, the quadruple rotary tool unit 53 and the triple rotary tool unit 54 are depicted to be slightly smaller. Furthermore, Fig. 8 shows states in which the quadruple rotary tool unit 53 and the triple rotary tool unit 54 have each been swiveled to positions removed from the spindle axis CL1 in the X1-axis direction.

As described above, by driving the swiveling motor 523 (see Fig. 2), the quadruple rotary tool unit 53 swivels about the first swiveling axis B1, and at the same time, the triple rotary tool unit 54 swivels about the second swiveling axis B2. Note that the first swiveling axis B1 and the second swiveling axis B2 extend in an orthogonal direction to the paper surface of Fig. 8. The dot-dot-dash lines in Fig. 8 show four states in which the quadruple rotary tool unit 53 and the triple rotary tool unit 54 have each been swiveled by 45-degree intervals. During machining, positions of a specified tool and the workpiece W in the Y1-axis direction are aligned by moving the tool post 5 (see Fig. 1) in the Y1-axis direction. For example, when one of the four one-side rotary tools 93a of the quadruple rotary tool unit 53 is specified and the quadruple rotary tool unit 53 is at the reference swiveling angle (swiveling angle 0 degrees), cross hole drilling can be performed on the workpiece W by moving the tool post 5 in the X1-axis direction. When the swiveling angle of the quadruple rotary tool unit 53 is inclined relative to the workpiece W by an angle other than 0 degrees, 90 degrees, or 180 degrees, oblique hole drilling can be performed on the workpiece W by the one-side rotary tool 93a by synchronizing the movement of the tool post 5 in the X1-axis direction with the movement of the headstock 3 in the Z1-axis direction. When the swiveling angle of the quadruple rotary tool unit 53 is 90 degrees, a hole can be drilled in the tip end part of the workpiece W by the one-side rotary tool 93a by moving the tool post 5 in the X1-axis direction and then moving the headstock 3 in the Z1-axis direction so that the one-side rotary tool 93a opposes the workpiece W.

The other-side rotary tools 93b are normally used to perform machining on the cut-off workpiece W1 gripped by the opposite spindle 61. By moving the tool post 5 (see Fig. 1) in the Y1-axis direction, one desired other-side rotary tool 93b is selected from the four other-side rotary tools 93b. Further, by moving the opposite headstock 6 in the X2-axis direction, the cut-off workpiece W1 is disposed in a position opposing the selected other-side rotary tool 93b. When the swiveling angle of the quadruple rotary tool unit 53 is 90 degrees, a hole can be drilled in a cut end part of the cut-off workpiece W1 by the other-side rotary tool 93b by moving the opposite headstock 6 in the Z2-axis direction. Further, when the swiveling angle of the quadruple rotary tool unit 53 is inclined relative to the cut-off workpiece W1 by an angle other than 0 degrees, 90 degrees, or 180 degrees, oblique hole drilling can be performed on the cut-off workpiece W1 by synchronizing the movement of the tool post 5 in the X1-axis direction or the movement of the opposite headstock 6 in the X2-axis direction with the movement of the opposite headstock 6 in the Z2-axis direction.

Next, procedures for attaching and removing the quadruple rotary tool unit 53 and the triple rotary tool unit 54 will be described, referring mainly to Figs. 2 and 4. When the quadruple rotary tool unit 53 is to be removed from the swiveling base 52, the screw 535 is loosened, whereupon the support shaft 534 is extracted from the lower end support bearing 563. The two screws 564 are then removed, whereupon the first lower end support member 56 is removed from the moving table 51. Next, the four screws 536 are removed, whereupon the quadruple rotary tool unit 53 is lowered and the first bearing case 5300 is extracted from the first swiveling sleeve 81. During this extraction process, the first coolant inlet 531 is extracted from the first engaging hole 81b. Thus, the quadruple rotary tool unit 53 can be removed from the swiveling base 52. Further, by performing opposite procedures to those described above, the quadruple rotary tool unit 53 can be attached to the swiveling base 52. Note that when the quadruple rotary tool unit 53 is lifted up so as to insert the first bearing case 5300 into the first swiveling sleeve 81, the angle of the quadruple rotary tool unit 53 in the swiveling direction is adjusted so that the first coolant inlet 531 and the first engaging hole 81b are aligned. Furthermore, when attaching the first lower end support member 56 to the moving table 51, the screws 564 are tightened in a state where the first lower end support member 56 contacts the three positioning pins 512. Thus, the first lower end support member 56 is fixed to the moving table 51 in a predetermined position.

When the triple rotary tool unit 54 is to be removed from the swiveling base 52, the four screws 546 are removed, whereupon the triple rotary tool unit 54 is lowered and the second bearing case 5400 is extracted from the second swiveling sleeve 82. During this extraction process, the second coolant inlet 541 is extracted from the second engaging hole 82b. Thus, the triple rotary tool unit 54 can be removed from the swiveling base 52. Further, by performing opposite procedures to those described above, the triple rotary tool unit 54 can be attached to the swiveling base 52. Note that when the triple rotary tool unit 54 is lifted up so as to insert the second bearing case 5400 into the second swiveling sleeve 82, the angle of the triple rotary tool unit 54 in the swiveling direction is adjusted so that the second coolant inlet 541 and the second engaging hole 82b are aligned. Here, the structure for attaching the quadruple rotary tool unit 53 to the swiveling base 52 and the structure for attaching the triple rotary tool unit 54 to the swiveling base 52 match, and apart from the positions of the cutout 81a and the cutout 82a, the structures of the first swiveling sleeve 81 and the second swiveling sleeve 82 of the swiveling base 52 also match. Hence, the quadruple rotary tool unit 53 and the triple rotary tool unit 54 can be attached to the swiveling base 52 so that the positions thereof are switched. When the quadruple rotary tool unit 53 and the triple rotary tool unit 54 are attached in switched positions, the quadruple rotary tool unit 53 corresponds to an example of the second swiveling unit, and the triple rotary tool unit 54 corresponds to an example of the first swiveling unit.

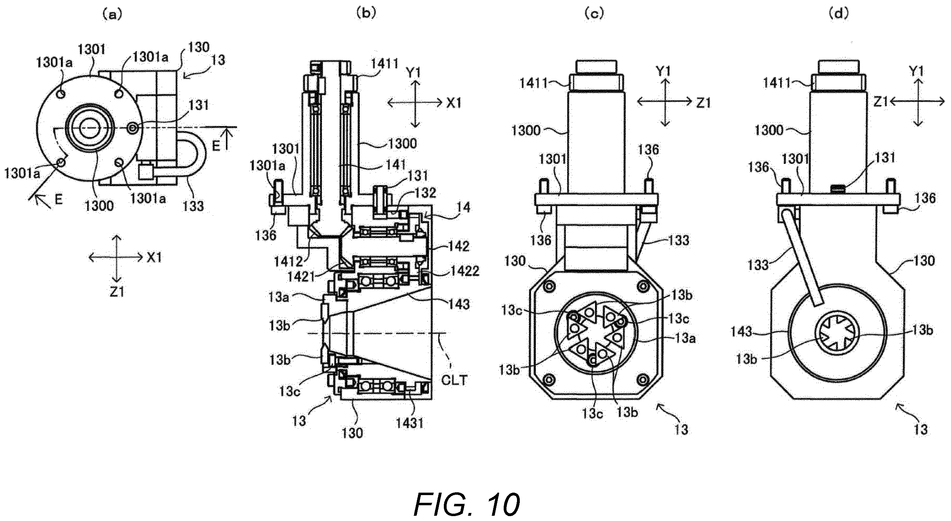

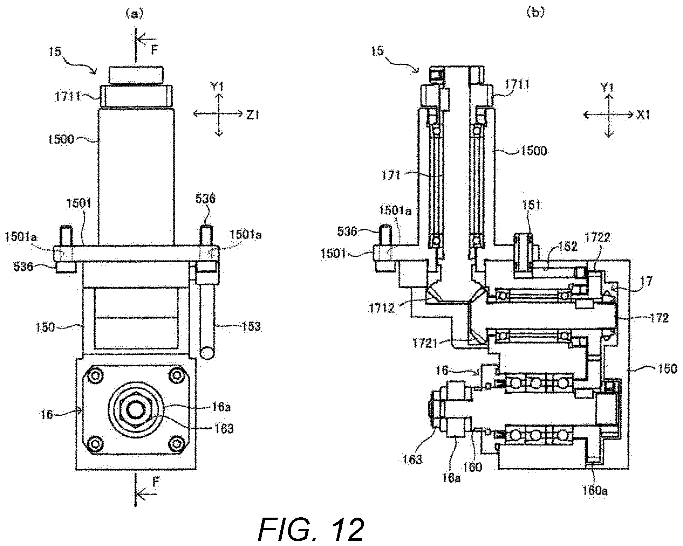

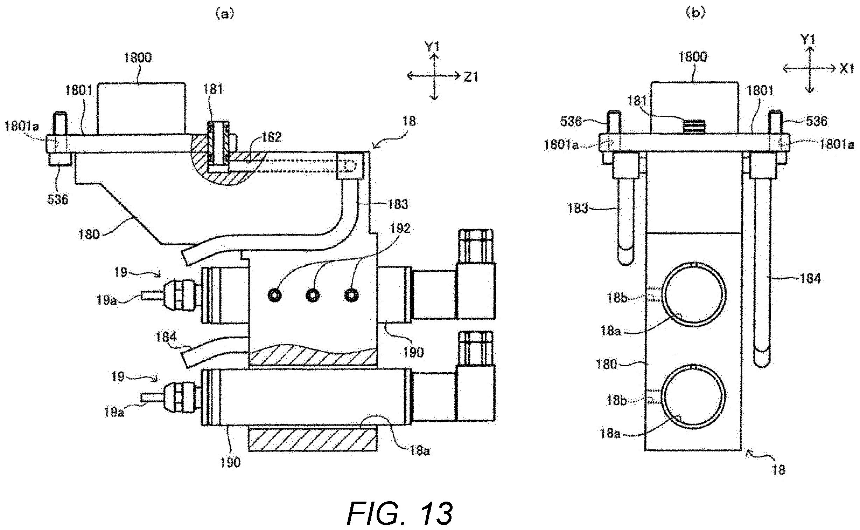

In the tool post 5 of this embodiment, different types of machining units other than the quadruple rotary tool unit 53 and the triple rotary tool unit 54 can also be attached to the swiveling base 52. In other words, the quadruple rotary tool unit 53 and the triple rotary tool unit 54 can be replaced by different types of machining units, such as a thread whirling unit 13 (see Fig. 10), a hob cutting unit 15 (see Fig. 12), or a high speed spindle unit 18 (see Fig. 13). These different types of machining units can be attached to the swiveling base 52 by similar procedures to the attachment procedures described above.

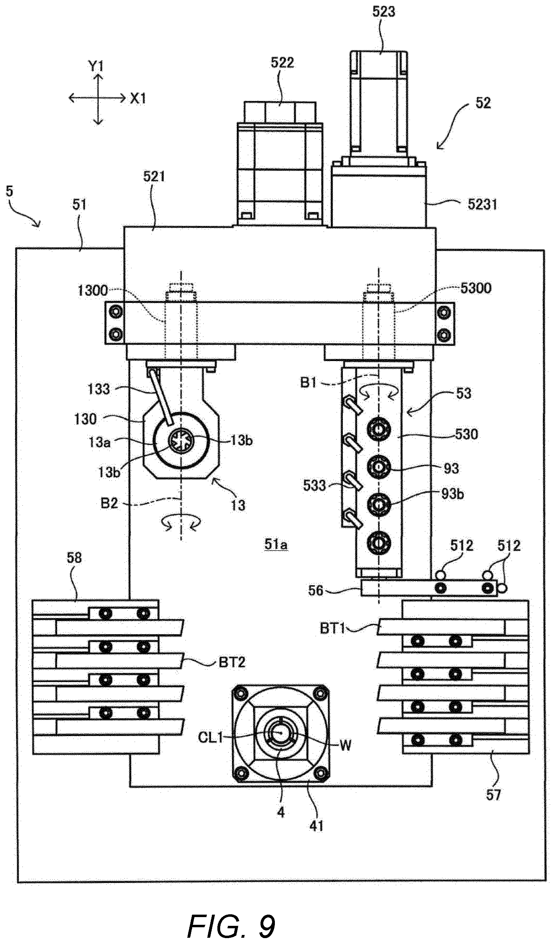

Fig. 9 is a front view of a tool post that is similar to that of Fig. 2 but illustrates a first replacement example. Fig. 9 shows a state in which the quadruple rotary tool unit 53 has been swiveled 90 degrees. In the following description, constituent elements that have already been described have been allocated the reference symbols used heretofore, and duplicate description thereof has sometimes been omitted.

As shown in Fig. 9, in the first replacement example, the thread whirling unit 13 is attached in place of the triple rotary tool unit 54 (see Fig. 2). Fig. 9 shows a state in which the thread whirling unit 13 has been swiveled 90 degrees. The thread whirling unit 13 corresponds to an example of the second swiveling unit. Further, the structure for attaching the quadruple rotary tool unit 53 to the swiveling base 52 and a structure for attaching the thread whirling unit 13 to the swiveling base 52 match. Hence, the quadruple rotary tool unit 53 and the thread whirling unit 13 can be attached to the swiveling base 52 so that the positions thereof are switched. When the quadruple rotary tool unit 53 and the thread whirling unit 13 are attached in switched positions, the thread whirling unit 13 corresponds to an example of the first swiveling unit.

The thread whirling unit 13 includes a whirling swiveling holder 130. A third bearing case 1300 is formed in an upper end part of the whirling swiveling holder 130. The third bearing case 1300 is inserted into the base body 521. The upper end part of the whirling swiveling holder 130 is attached removably to the base body 521. By driving the swiveling motor 523 (see Fig. 2), the thread whirling unit 13 swivels by a maximum of 180 degrees using the second swiveling axis B2 as the swiveling center. A whirling tool attachment part for attaching a whirling tool 13a removably is formed on the whirling swiveling holder 130. Fig. 9 shows a state in which the whirling tool 13a is attached to the whirling swiveling holder 130 with six insert tips 13b attached thereto. The whirling tool 13a corresponds to an example of the second tool. Note that when the thread whirling unit 13 is attached to the first swiveling sleeve 81 (see Fig. 4) of the swiveling base 52, the whirling tool 13a corresponds to an example of the first tool. In the first replacement example, the whirling tool 13a of the thread whirling unit 13 is disposed substantially on the second swiveling axis B2, and therefore the thread whirling unit 13 is unlikely to vibrate or bend, meaning that machining can be performed with high machining accuracy.

Fig. 10(a) is a plan view of the thread whirling unit shown in Fig. 9, Fig. 10(b) is an E-E sectional view of Fig. 10(a), Fig. 10(c) is a left-side view of the thread whirling unit shown in Fig. 10(a), and Fig. 10(d) is a right-side view of the thread whirling unit shown in Fig. 10(a). Note that Fig. 10(a) shows a state in which the thread whirling unit 13 is at the reference swiveling angle.

As shown in Fig. 10(a) and Fig. 10(b), the third bearing case 1300, a flange 1301, and a third connection shaft 141 have the same shapes as the first bearing case 5300, the flange 5301, and the first connection shaft 911 shown in Fig, 5(b). Further, a third transmission shaft 142 has the same shape as the first transmission shaft 912 apart from having a shorter axial length. As shown in Fig. 10(b), by fastening the four screws 536, which penetrate four through-holes 1301a formed in the flange 5301, respectively to the four screw holes 82d formed in the flange-shaped part of the second swiveling sleeve 82, shown in Fig. 4(c), the thread whirling unit 13 is attached removably to the swiveling base 52.

As shown in Fig. 10(b), the whirling swiveling holder 130 includes a third coolant inlet 131, a fifth passage 132, and a third coolant nozzle 133. The third coolant inlet 131, the fifth passage 132, and the third coolant nozzle 133 are configurations for discharging the coolant supplied from the swiveling base 52 toward the insert tips 13b attached to the whirling tool 13a. The third coolant inlet 131 is fixed to the upper end part of the whirling swiveling holder 130, and an upper-side part thereof projects upward. The third coolant inlet 131 has the same shape as the first coolant inlet 531. In the state shown in Fig. 9, in which the thread whirling unit 13 is attached to the swiveling base 52, the upper-side part of the third coolant inlet 131 engages with the second engaging hole 82b shown in Fig. 4. The fifth passage 132 extends from a lower end of the third coolant inlet 131 to the third coolant nozzle 133. The third coolant nozzle 133 projects toward the insert tips 13b of the whirling tool 13a. A discharge port is formed in a tip end of the third coolant nozzle 133. Coolant that has passed through the third coolant inlet 131 and the fifth passage 132 is discharged through the discharge port of the third coolant nozzle 133 toward the insert tips 13b.

A thread rotating mechanism 14 that is connected to the rotating driving force transmitting mechanism 7 (see Fig. 4(b)) in order to transmit the driving force transmitted from the rotating driving force transmitting mechanism 7 to the whirling tool 13a is provided inside the thread whirling unit 13. The thread rotating mechanism 14 includes the third connection shaft 141 and the third transmission shaft 142, described above, and a thread rotor 143. A third connection gear 1411 is fixed to an upper end of the third connection shaft 141. The third connection gear 1411 engages with the second driven gear 74, shown in Fig. 4(b), in a state where the thread whirling unit 13 is attached to the swiveling base 52. A bevel gear 1412 is fixed to a lower end of the third connection shaft 141.

Fig. 10(b) shows the thread whirling unit 13 at the reference swiveling angle. At the reference swiveling angle, the third transmission shaft 142 extends in the X1-axis direction. A bevel gear 1421 is fixed to one end of the third transmission shaft 142. The bevel gear 1421 engages with the bevel gear 1412 of the third connection shaft 141. A spur gear 1422 is fixed to the other end of the third transmission shaft 142.

The thread rotor 143 has a trumpet-shaped cavity that widens from the left side toward the right side in Fig. 10(b) formed in the interior thereof. The thread rotor 143 is supported rotatably by two bearings disposed in a casing of the whirling swiveling holder 130. A spur gear 1431 is fixed to the other end of the thread rotor 143. The spur gear 1431 engages with the spur gear 1422 of the third transmission shaft 142. As shown in Fig. 10(c), the whirling tool 13a is attached to one end surface of the thread rotor 143 by three screws 13c. By removing the screws 13c, the whirling tool 13a can be removed from the whirling swiveling holder 130. Note that the six insert tips 13b are also attached to a base of the whirling tool 13a by respective screws, and by removing these screws, the insert tips 13b can be removed from the base of the whirling tool 13a. Furthermore, as shown in Fig. 10(a) and Fig. 10(d), the third coolant nozzle 133 discharges the coolant from the other end side toward the one end side of the thread rotor 143. The driving force of the tool rotating motor 522 (see Fig. 2) is transmitted to the whirling tool 13a by the rotating driving force transmitting mechanism 7 described above (see Fig. 4(b)) and the thread rotating mechanism 14, causing the whirling tool 13a to rotate using a thread axis CLT shown in Fig. 10(b) as a rotation center.

Similarly to the triple rotary tool unit 54 described above (see Fig. 6), in a state where the thread whirling unit 13 is attached to the swiveling base 52, the third bearing case 1300 engages with the tubular part of the second swiveling sleeve 82 (see Fig. 4). Further, the third coolant inlet 131 engages with the second engaging hole 82b (see Fig. 4). As a result of these engagements, the position in which the thread whirling unit 13 is attached to the swiveling base 52 and the attachment angle of the thread whirling unit 13 in the swiveling direction are fixed. Hence, when the second swiveling sleeve 82 is rotated by driving the swiveling motor 523 (see Fig. 2), the thread whirling unit 13 swivels in synchronization with and at the same angle as the quadruple rotary tool unit 53 so as to follow the rotation thereof.

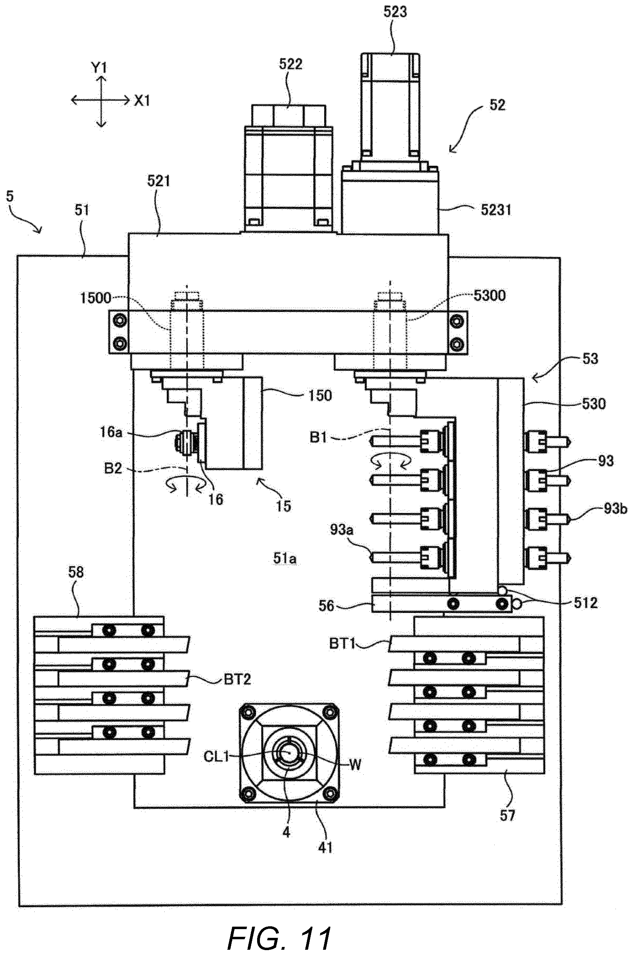

Fig. 11 is a front view of a tool post that is similar to that of Fig. 2 but illustrates a second replacement example. Note that in Fig. 11, the first coolant nozzles 533 (see Fig. 2) and a fourth coolant nozzle 153 to be described below (see Fig. 12(a)) have been omitted.

As shown in Fig. 11, in the second replacement example, the hob cutting unit 15 is attached in place of the triple rotary tool unit 54 (see Fig. 2). Fig. 11 shows the quadruple rotary tool unit 53 and the hob cutting unit 15 at the reference swiveling angle. The hob cutting unit 15 corresponds to an example of the second swiveling unit. Further, the structure for attaching the quadruple rotary tool unit 53 to the swiveling base 52 and a structure for attaching the hob cutting unit 15 to the swiveling base 52 match. Hence, the quadruple rotary tool unit 53 and the hob cutting unit 15 can be attached to the swiveling base 52 so that the positions thereof are switched. When the quadruple rotary tool unit 53 and the hob cutting unit 15 are attached in switched positions, the hob cutting unit 15 corresponds to an example of the first swiveling unit.

The hob cutting unit 15 includes a hob swiveling holder 150 and a hob module 16. The hob module 16 is fixed to the hob swiveling holder 150. A fourth bearing case 1500 is formed in an upper end part of the hob swiveling holder 150. The fourth bearing case 1500 is inserted into the base body 521. The upper end part of the hob swiveling holder 150 is attached removably to the base body 521. By driving the swiveling motor 523 (see Fig. 2), the hob cutting unit 15 swivels by a maximum of 180 degrees using the second swiveling axis B2 as the swiveling center. Fig. 11 shows a state in which a hob cutter 16a is attached to the hob module 16. The hob cutter 16a corresponds to an example of the second tool. Note that when the positions of the quadruple rotary tool unit 53 and the hob cutting unit 15 are switched such that the hob cutting unit 15 is attached to the first swiveling sleeve 81 (see Fig. 4) of the swiveling base 52, the hob cutter 16a corresponds to an example of the first tool. In the second replacement example, the hob cutter 16a of the hob cutting unit 15 is disposed substantially on the second swiveling axis B2, and therefore the hob cutting unit 15 is unlikely to vibrate or bend, meaning that machining can be performed with high machining accuracy.

Fig. 12(a) is a left-side view of the hob cutting unit shown in Fig. 11, and Fig. 12(b) is an F-F sectional view of Fig. 12(a).

As shown in Fig. 12(a) and Fig. 12(b), the fourth bearing case 1500, a flange 1501, and a fourth connection shaft 171 have the same shapes as the first bearing case 5300, the flange 5301, and the first connection shaft 911 shown in Fig, 5(b). Further, a fourth transmission shaft 172 has the same shape as the first transmission shaft 912 apart from having a shorter axial length. Four through-holes 1501a are formed in the flange 1501. By fastening the four screws 536, which penetrate the through-holes 1501a, respectively to the four screw holes 82d formed in the flange-shaped part of the second swiveling sleeve 82, shown in Fig. 4(c), the hob cutting unit 15 is attached removably to the swiveling base 52.

The hob swiveling holder 150 includes a fourth coolant inlet 151, a sixth passage 152, and a fourth coolant nozzle 153. The fourth coolant inlet 151, the sixth passage 152, and the fourth coolant nozzle 153 are configurations for discharging coolant supplied from the swiveling base 52 toward the hob cutter 16a. The fourth coolant inlet 151 is fixed to the upper end part of the hob swiveling holder 150, and an upper-side part thereof projects upward. The fourth coolant inlet 151 has the same shape as the first coolant inlet 531. In the state shown in Fig. 11, in which the hob cutting unit 15 is attached to the swiveling base 52, the upper-side part of the fourth coolant inlet 151 engages with the second engaging hole 82b shown in Fig. 4. The sixth passage 152 extends from a lower end of the fourth coolant inlet 151 to the fourth coolant nozzle 153. The fourth coolant nozzle 153 projects toward the hob cutter 16a. A discharge port is formed in a tip end of the fourth coolant nozzle 153. Coolant that has passed through the fourth coolant inlet 151 and the sixth passage 152 is discharged through the discharge port of the fourth coolant nozzle 153 toward the hob cutter 16a.

A hob rotating mechanism 17 that is connected to the rotating driving force transmitting mechanism 7 (see Fig. 4(b)) in order to transmit the driving force transmitted from the rotating driving force transmitting mechanism 7 to the hob cutter 16a is provided inside the hob cutting unit 15. The hob rotating mechanism 17 includes the fourth connection shaft 171 and the fourth transmission shaft 172, described above. A fourth connection gear 1711 is fixed to an upper end of the fourth connection shaft 171. The fourth connection gear 1711 engages with the second driven gear 74, shown in Fig. 4(b), in a state where the hob cutting unit 15 is attached to the swiveling base 52. A bevel gear 1712 is fixed to a lower end of the fourth connection shaft 171.

Fig. 12(b) shows the hob cutting unit 15 at the reference swiveling angle. At the reference swiveling angle, the fourth transmission shaft 172 extends in the X1-axis direction. A bevel gear 1721 is fixed to one end of the fourth transmission shaft 172. The bevel gear 1721 engages with the bevel gear 1712 of the fourth connection shaft 171. A spur gear 1722 is fixed to the other end of the fourth transmission shaft 172.

As shown in Fig. 12(b), the hob module 16 includes a fourth rotary shaft 160. The hob cutter 16a is inserted into a shaft having a key groove, formed on one end part of the fourth rotary shaft 160, and fixed to the fourth rotary shaft 160 by a key, not shown in the figures, and a nut 163. By removing the nut 163, the hob cutter 16a can be extracted from the fourth rotary shaft 160. The fourth rotary shaft 160 is supported on the hob swiveling holder 150 rotatably by three bearings. A spur gear 160a is fixed to the other end side of the fourth rotary shaft 160. The spur gear 160a of the hob module 16 engages with the spur gear 1722 of the fourth transmission shaft 172. The driving force of the tool rotating motor 522 (see Fig. 2) is transmitted to the fourth rotary shaft 160 by the rotating driving force transmitting mechanism 7 described above (see Fig. 4(b)), the hob rotating mechanism 17, and the spur gear 1722, causing the hob cutter 16a to rotate.

Similarly to the triple rotary tool unit 54 described above (see Fig. 6), in a state where the hob cutting unit 15 is attached to the swiveling base 52, the fourth bearing case 1500 engages with the tubular part of the second swiveling sleeve 82 (see Fig. 4). Further, the fourth coolant inlet 151 engages with the second engaging hole 82b (see Fig. 4). As a result of these engagements, the position in which the hob cutting unit 15 is attached to the swiveling base 52 and the attachment angle of the hob cutting unit 15 in the swiveling direction are fixed. Hence, when the second swiveling sleeve 82 is rotated by driving the swiveling motor 523 (see Fig. 2), the hob cutting unit 15 swivels in synchronization with and at the same angle as the quadruple rotary tool unit 53 so as to follow the rotation thereof.

Fig. 13(a) is a front view of a high speed spindle unit that can be attached to the swiveling base in place of the quadruple rotary tool unit or the triple rotary tool unit shown in Fig. 2, and Fig. 13(b) is a right-side view of the high speed spindle unit shown in Fig. 13(a). Note that Fig. 13(a) shows partial cross-sections, and these parts are shaded. Further, Fig. 13(b) shows a state in which a spindle module 19 is not attached to a spindle swiveling holder 180.

Fig. 13(a) shows the high speed spindle unit 18 at the reference swiveling angle. The high speed spindle unit 18 can be attached to either the first swiveling sleeve 81 or the second swiveling sleeve 82 shown in Fig. 4(b). The high speed spindle unit 18 corresponds to an example of the first swiveling unit when attached to the first swiveling sleeve 81, and corresponds to an example of the second swiveling unit when attached to the second swiveling sleeve 82.

As shown in Fig. 13(a) and Fig. 13(b), the high speed spindle unit 18 includes the spindle swiveling holder 180. The spindle swiveling holder 180 is used to hold the spindle module 19. Two attachment holes 18a for attaching the spindle module 19 are formed in the spindle swiveling holder 180 side by side in the Y1-axis direction. Note that one, three, or more attachment holes 18a may be provided. Further, as shown in Fig. 13(b), screw holes 18b for fixing the spindle module 19 are formed in the spindle swiveling holder 180. Three screw holes 18b are formed for each attachment hole 18a. Fig. 13(a) shows a state in which two spindle modules 19 are each attached to the spindle swiveling holder 180 by being inserted into the attachment holes 18a and fixed by the three screws 192. The spindle module 19 is a module such as an electric spindle having a motor in the interior thereof, or a pneumatic spindle, and is normally used in cases where it is desirable to rotate the rotary tool at a higher speed than when the rotary tool is rotated by the tool rotating motor 522 (see Fig. 2). In this embodiment, the spindle modules 19 are electric spindles. The spindle modules 19 can be removed from the spindle swiveling holder 180 by loosening the screws 192. Each of the spindle modules 19 includes a spindle base 190. A high speed rotary tool 19a is attached to the spindle base 190 by a collect chuck provided on one end part of the spindle base 190. By loosening the collet chuck, the high speed rotary tool 19a can be extracted from the spindle base 190. When the high speed spindle unit 18 is attached to the first swiveling sleeve 81, the high speed rotary tool 19a corresponds to an example of the first tool, and when the high speed spindle unit 18 is attached to the second swiveling sleeve 82, the high speed rotary tool 19a corresponds to an example of the second tool. An electric cable, not shown in the figures, is connected to the other end part of the spindle base 190. A motor inside the spindle base 190 is driven upon reception of electric power from the power cable, whereby the high speed rotary tool 19a is rotated at high speed. Note that when the spindle module 19 is a pneumatic spindle, an air cable for supplying air is connected to the other end part of the spindle base 190.

As shown in Fig. 13(a) and Fig. 13(b), a cylindrical projection 1800 is formed on an upper end part of the spindle swiveling holder 180. The projection 1800 is the part that is inserted into the base body 521. The outer diameter of the projection 1800 is the same as the outer diameter of the first bearing case 5300 shown in Fig. 5(b). A flange 1801 is formed on a base part of the projection 1800. The flange 1801 has the same shape as the flange 5301 shown in Fig. 5(b). Four through-holes 1501a are formed in the flange 1801. By fastening the four screws 536 penetrating the four through-holes 1501a respectively to the four screw holes 81d formed in the first swiveling sleeve 81 or the four screw holes 82d formed in the second swiveling sleeve 82, shown in Fig. 4(c), the high speed spindle unit 18 is attached removably to the swiveling base 52. By driving the swiveling motor 523 (see Fig. 2), the high speed spindle unit 18 attached to the swiveling base 52 swivels by a maximum of 180 degrees using the first swiveling axis B1 or the second swiveling axis B2 as the swiveling center.

The spindle swiveling holder 180 includes a fifth coolant inlet 181, a seventh passage 182, a fifth coolant nozzle 183, and a sixth coolant nozzle 184. The fifth coolant inlet 181, the seventh passage 182, the fifth coolant nozzle 183, and the sixth coolant nozzle 184 are configurations for discharging the coolant supplied from the swiveling base 52 (see Fig. 2) toward the high speed rotary tool 19a. The fifth coolant inlet 181 is fixed to the upper end part of the spindle swiveling holder 180, and an upper-side part thereof projects upward. The fifth coolant inlet 181 has the same shape as the first coolant inlet 531. In a state where the high speed spindle unit 18 is attached to the swiveling base 52, the upper-side part of the fifth coolant inlet 181 engages with the first engaging hole 81b formed in the first swiveling sleeve 81 or the second engaging hole 82b formed in the second swiveling sleeve 82, shown in Fig. 4. The seventh passage 182 extends from a lower end of the fifth coolant inlet 181 and bifurcates midway so as to be connected to the fifth coolant nozzle 183 and the sixth coolant nozzle 184. The fifth coolant nozzle 183 and the sixth coolant nozzle 184 project toward a tip end of the high speed rotary tool 19a. Discharge ports are formed in tip ends of the fifth coolant nozzle 183 and the sixth coolant nozzle 184. Coolant that has passed through the fifth coolant inlet 181 and the seventh passage 182 is discharged through the discharge ports of the fifth coolant nozzle 183 and the sixth coolant nozzle 184 in the projection direction of the high speed rotary tool 19a.

According to the NC lathe 1 described above, the triple rotary tool unit 54, the thread whirling unit 13, the hob cutting unit 15, and the high speed spindle unit 18 can easily be attached to and removed from the swiveling base 52 simply by tightening and loosening the screws 536 or the screws 546. Furthermore, the quadruple rotary tool unit 53 can also be easily attached to and removed from the first lower end support member 56, and simply by tightening and loosening the screws 536, can also be easily attached to and removed from the swiveling base 52. Hereinafter, when there is no need to distinguish between the quadruple rotary tool unit 53, the triple rotary tool unit 54, the thread whirling unit 13, the hob cutting unit 15, and the high speed spindle unit 18, these units will be referred to simply as the units. By removing the units from the swiveling base 52, a chip removal operation and an operation for exchanging the rotary tools, the whirling tool 13a, the hob cutter 16a, and the high speed rotary tool 19a can be performed outside the cutting chamber 11, and as a result, the tool exchanging operation can be performed easily. Moreover, maintenance operations can also be performed easily on the units. Furthermore, the unit that is suitable for the machining content can easily be selected and attached exchangeably to the swiveling base 52, and as a result, various different types of machining can be performed. Accordingly, when the number of used rotary tools is to be increased, for example, a rotary tool unit having a swiveling holder to which it is possible to attach the desired number of rotary tools can be attached to the swiveling base, and as a result, machining using a large number of tools can also be performed. In addition, the units include a passage through which the coolant passes and a coolant nozzle, and by attaching the unit, a configuration in which the passage in the swiveling base 52 and the passage in the unit are coupled is provided such that when the unit swivels, the discharge direction of the coolant follows the swiveling thereof. Thus, even when the swiveling angle of the unit changes, the coolant can be discharged in an appropriate direction for the machining, and as a result, the machining accuracy increases. Accordingly, the ability to discharge chips and the ability to cool the tool improve, leading to an increase in the life of the tool. Moreover, the coolant inlet and the engaging hole that couple the passage in the swiveling base 52 to the passage in the unit double as a structure for positioning the swiveling base 52 and the unit, and therefore the number of components of the NC lathe 1 can be suppressed. Furthermore, by configuring the coolant inlet and the engaging hole to double as a positioning structure, almost no gap is formed therebetween, and as a result, coolant leakage between the coolant inlet and the engaging hole can be suppressed. In other words, a sealing effect of the part of the coolant passage that is separated when the unit is attached and removed can be increased. In addition, the lower end of the quadruple rotary tool unit 53 is supported by the first lower end support member 56, and therefore the quadruple rotary tool unit 53 is unlikely to bend. As a result, a reduction in the machining accuracy during machining using the one-side rotary tools 93a and the other-side rotary tools 93b attached to the lower end side of the quadruple rotary tool unit 53 can be suppressed. Furthermore, two units can be attached to the swiveling base 52, and by respectively swiveling the attached units, even more different types of machining can be performed.

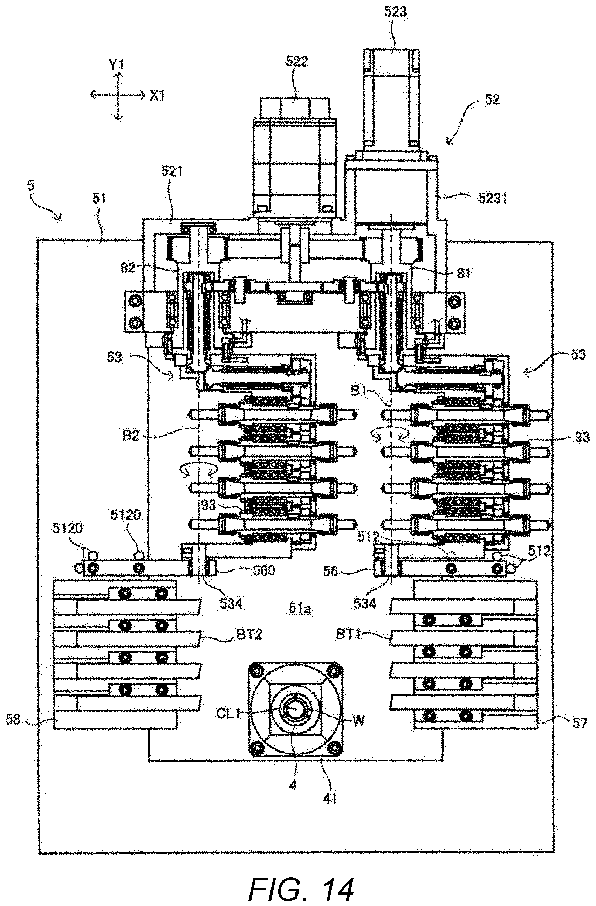

Next, a modified example of the tool post 5 described heretofore will be described. Fig. 14 is a front view of a tool post that is similar to that of Fig. 2 but illustrates a modified example of the tool post.

As shown in Fig. 14, the tool post 5 of this modified example differs from the tool post 5 shown in Fig. 2 in that the quadruple rotary tool unit 53 is attached to the second swiveling sleeve 82, and a second lower end support member 560 is provided. Further, three positioning pins 5120 and two screw holes, not shown in the figures, are formed on the left-side part of the moving table 51 shown in Fig. 14. The three positioning pins and the two screw holes are configurations for positioning the second lower end support member 560 and attaching the second lower end support member 560 to the moving table 51. The second lower end support member 560 is shaped to be left-right symmetrical to the first lower end support member 56.

According to this modified example, similar effects to those of the above embodiment are achieved. Furthermore, an effect is achieved in that even when tool units that are long in the Y1-axis direction are attached to both the first swiveling sleeve 81 and the second swiveling sleeve 82, highly accurate machining can be performed.

The present invention is not limited to the embodiment described above, and various amendments may be applied thereto within the scope set forth in the claims. For example, in the example described in the embodiment, the present invention is applied to the NC lathe 1, but the present invention may be applied to another machine tool, such as a machining center. Further, a separate tool post may be provided for the opposite spindle 61. Furthermore, a brake mechanism may be provided to maintain the rotation angle of the second swiveling sleeve 82 so that the second swiveling sleeve 82 does not rotate due to the load exerted thereon during the machining. Moreover, two swiveling motors 523 may be provided so that the first swiveling sleeve 81 and the second swiveling sleeve 82 are swiveled by different motors. In this case, by having the control apparatus 2 control the two motors individually, the first swiveling sleeve 81 and the second swiveling sleeve 82 can be caused to perform different swiveling operations. In addition, coolant inlets may be formed in the first swiveling sleeve 81 and the second swiveling sleeve 82, and an engaging hole with which the coolant inlets engage and to which the passages are connected may be formed in the swiveling holder. Furthermore, positioning pins for positioning the first swiveling sleeve 81, the second swiveling sleeve 82, and the swiveling unit in the swiveling direction may be provided separately to the coolant inlets. Moreover, the first rotary tool modules 93 may be attached removably to the first swiveling holder 530. Similarly, the second rotary tool modules 94 may be attached removably to the second swiveling holder 540. Also similarly, the hob module 16 may be attached removably to the hob swiveling holder 150.

Note that constituent elements included only in the descriptions of the modified examples described above may also be applied to other modified examples.

### [Reference Signs List]

- 1: NC lathe (machine tool)
- 5: Tool post
- 31: Spindle
- 52: Swiveling base
- 53: Quadruple rotary tool unit (first swiveling unit)
- B1: First swiveling axis
- CL1: Spindle axis
- 93a: One-side rotary tool (first tool)
- W: Workpiece

## Claims

1. A machine tool comprising a spindle that is capable of rotating about a spindle axis while gripping a workpiece, and a tool post,
wherein the tool post includes a first swiveling unit to which a first tool for machining the workpiece is attached and which is capable of swiveling using, as a swiveling center, a first swiveling axis that extends in a first-axis direction orthogonal to the spindle axis, and a swiveling base to which the first swiveling unit is attached, and
the first swiveling unit is attached to the swiveling base removably.

2. The machine tool according to claim 1, wherein at least two of a rotary tool unit to which a rotary tool is attached, a thread whirling unit, a hob cutting unit, and a high speed spindle unit are attached to the swiveling base exchangeably as the first swiveling unit.

3. The machine tool according to claim 1 or 2, wherein the swiveling base includes a first passage through which a coolant passes, and
the first swiveling unit includes a second passage which, in a state where the first swiveling unit is attached to the swiveling base, is coupled to the first passage such that the coolant that has passed through the first passage is supplied thereto, and a coolant nozzle for discharging the coolant that has passed through the second passage.

4. The machine tool according to claim 3, wherein the swiveling base includes an engaged part,
the first swiveling unit includes an engaging part that engages with the engaged part, an attachment position in which the first swiveling unit is attached to the swiveling base being determined by engaging the engaging part with the engaged part,
the first passage is connected to the engaged part, and
the second passage is connected to the engaging part.

5. The machine tool according to any one of claims 1 to 4, wherein an upper-side part of the first swiveling unit is attached to the swiveling base, and
the tool post includes a lower end support part that supports a lower end part of the first swiveling unit.

6. The machine tool according to any one of claims 1 to 5, wherein the tool post includes a second swiveling unit to which a second tool for machining the workpiece is attached and which is capable of swiveling using a second swiveling axis, which extends in the first-axis direction, as the swiveling center, and
the second swiveling unit is attached to the swiveling base removably.
